# EUROPEAN PATENT APPLICATION

(11) **EP 4 503 576 A1**
(43) Date of publication of application: **05.02.2025**
(21) Application number: 22934112.8
(22) Date of filing: 30.03.2022
(51) Int. Cl.: H04L 67/00

(54) **REPORTING METHOD AND APPARATUS, DEVICE, AND STORAGE MEDIUM**

(71) Applicant: Beijing Xiaomi Mobile Software Co., Ltd., Beijing 100085 (CN)
(72) Inventor: CHEN, Dong, Beijing 100085 (CN)
(74) Representative: Gunzelmann, Rainer
(86) International application number: PCT/CN2022/084173
(87) International publication number: WO 2023/184261

(57) **Abstract**

The present disclosure belongs to the technical field of communications. Provided are a reporting method and apparatus, a device, and a storage medium. The method comprises: a UE sending a session request message to a network device, wherein the session request message comprises capability information reported by the UE, and the capability information comprises at least one of the following: indication information for indicating whether the UE supports a computing power sharing function, and a computing power parameter of the UE. It can be seen therefrom that in the method provided in the present disclosure, the network device can share the computing power of the UE on the basis of the capability information reported by the UE, such that the resource utilization rate is maximized, the computing efficiency is improved, and the computing cost is reduced.

## Description

### TECHNICAL FIELD

The present disclosure relates to the field of communication technologies, and more particularly to a reporting method/apparatus/device and a storage medium.

### BACKGROUND

In a communication system, it is usually necessary to share the computing power of a network device or a user equipment (UE) for use by other terminals in order to achieve the goals of "maximizing the resource utilization, improving the computing efficiency, and reducing the computing cost".

In the related art, the computing power of the UE can be shared with the network device or other terminals. However, in the related art, the network device may not know whether the UE supports the computing power sharing function, and therefore cannot perform relevant configurations on the UE, so that the UE is unable to provide the computing power to the network device or other terminals.

### SUMMARY

The reporting method/apparatus/device and the storage medium proposed in the present disclosure are used for the UE to report to the network device whether the UE supports the computing power sharing function, so as to solve the technical problem that "the UE cannot provide the computing power to the network device or other terminals because the network device does not know whether the UE supports the computing power sharing function".

A method proposed in embodiments of a first aspect of the present disclosure is performed by a UE, including: sending a session request message to a network device, in which the session request message includes capability information reported by the UE, and the capability information includes at least one of: indication information for indicating whether the UE supports a computing power sharing function; or computing power parameters of the UE.

Optionally, in an embodiment of the present disclose, the computing power parameters of the UE include at least one of: a main frequency of a computing unit of the UE; a cache of a computing unit of the UE; a number of cores of a computing unit of the UE; a bus speed of a computing unit of the UE; or a proportion of a shareable computing power of the UE in a total computing power.

Optionally, in an embodiment of the present disclose, the session request message is any one of: a session establishment request; or a session modification request.

Optionally, in an embodiment of the present disclose, sending the session request message to the network device includes: sending the session request message to the network device via a non-access stratum (NAS) signaling.

Optionally, in an embodiment of the present disclose, the session request message is used to request a packet data unit (PDU) session and/or other sessions.

Optionally, in an embodiment of the present disclose, the capability information is carried in an information element (IE) of the session request message.

Optionally, in an embodiment of the present disclose, in case that the session request message is used to request the PDU session, the IE includes a UE 5G session management (5GSM) core network capability.

Optionally, in an embodiment of the present disclose, in case that the session request message is used to request the PDU session, the session request includes any one of: a PDU session establishment request; or a PDU session modification request.

A method proposed in embodiments of a second aspect of the present disclosure is performed by a network device, including: receiving a session request message from a UE, in which the session request message includes capability information reported by the UE, and the capability information includes at least one of indication information for indicating whether the UE supports a computing power sharing function, or computing power parameters of the UE; and using a computing power of the UE based on the capability information.

Optionally, in an embodiment of the present disclose, the computing power parameters of the UE include at least one of: a main frequency of a computing unit of the UE; a cache of a computing unit of the UE; a number of cores of a computing unit of the UE; a bus speed of a computing unit of the UE; or a proportion of a shareable computing power of the UE in a total computing power.

Optionally, in an embodiment of the present disclose, using the computing power of the UE based on the capability information includes: using the computing power of the UE in case that the indication information indicates that the UE supports the computing power sharing function.

Optionally, in an embodiment of the present disclose, the session request message is any one of: a session establishment request; or a session modification request.

Optionally, in an embodiment of the present disclose, receiving the session request message from the UE includes: receiving the session request message from the UE via a NAS signaling.

Optionally, in an embodiment of the present disclose, the session request message is used to request a PDU session and/or other sessions.

Optionally, in an embodiment of the present disclose, the capability information is carried in an IE of the session request message.

Optionally, in an embodiment of the present disclose, in case that the session request message is used to request the PDU session, the IE includes a UE 5GSM core network capability.

Optionally, in an embodiment of the present disclose, in case that the session request message is used to request the PDU session, the session request includes any one of: a PDU session establishment request; or a PDU session modification request.

A reporting apparatus proposed in embodiments of yet another aspect of the present disclosure includes: a sending module configured to send a session request message to a network device, in which the session request message includes capability information reported by the UE, and the capability information includes at least one of: indication information for indicating whether the UE supports a computing power sharing function; or computing power parameters of the UE.

A reporting apparatus proposed in embodiments of yet another aspect of the present disclosure includes: a receiving module configured to receive a session request message from a UE, in which the session request message includes capability information reported by the UE, and the capability information includes at least one of indication information for indicating whether the UE supports a computing power sharing function, or computing power parameters of the UE; and a processing module configured to use a computing power of the UE based on the capability information.

A communication device proposed in embodiments of yet another aspect of the present disclosure includes a processor and a memory having stored therein a computer program, in which the processor is configured to execute the computer program stored in the memory to cause the device to perform the method according to the above embodiments of the first aspect of the present disclosure.

A communication device proposed in embodiments of yet another aspect of the present disclosure includes a processor and a memory having stored therein a computer program, in which the processor is configured to execute the computer program stored in the memory to cause the device to perform the method according to the above embodiments of the second aspect of the present disclosure.

A communication device proposed in embodiments of yet another aspect of the present disclosure includes a processor and an interface circuit configured to receive code instructions and transmit the code instructions to the processor, in which the processor is configured to run the code instructions to perform the method according to the above embodiments of the first aspect of the present disclosure.

A communication device proposed in embodiments of yet another aspect of the present disclosure includes a processor and an interface circuit configured to receive code instructions and transmit the code instructions to the processor, in which the processor is configured to run the code instructions to perform the method according to the above embodiments of the second aspect of the present disclosure.

A computer-readable storage medium proposed in embodiments of yet another aspect of the present disclosure has stored therein instructions that, when executed, cause the method according to the above embodiments of the first aspect of the present disclosure to be implemented.

A computer-readable storage medium proposed in embodiments of yet another aspect of the present disclosure has stored therein instructions that, when executed, cause the method according to the above embodiments of the second aspect of the present disclosure to be implemented.

In conclusion, in the reporting method/apparatus/device and the storage medium provided in the embodiments of the present disclosure, the UE can send the session request message to the network device, in which the session request message includes capability information reported by the UE, and the capability information may include at least one of indication information for indicating whether the UE supports the computing power sharing function or the computing power parameters of the UE. It can be seen that in the embodiments of the present disclosure, the UE can report capability information to the network device by sending the session request message to the network device so as to inform the network device whether the UE supports the computing power sharing and/or inform the network device of the computing power parameters of the UE. Then, the network device can share the computing power of the UE based on the capability information reported by the UE, thus maximizing the resource utilization, improving the computing efficiency, and reducing the computing cost.

### BRIEF DESCRIPTION OF THE DRAWINGS

These and other aspects and advantages of the present disclosure will become apparent and more readily appreciated from the following descriptions of embodiments made with reference to the drawings, in which
FIG. 1 is a schematic flow chart of a reporting method provided in an embodiment of the present disclosure;
FIG. 2 is a schematic flow chart of a reporting method provided in another embodiment of the present disclosure;
FIG. 3 is a schematic flow chart of a reporting method provided in still another embodiment of the present disclosure;
FIG. 4 is a schematic flow chart of a reporting method provided in yet another embodiment of the present disclosure;
FIG. 5 is a schematic flow chart of a reporting method provided in yet another embodiment of the present disclosure;
FIG. 6 is a schematic flow chart of a reporting method provided in yet another embodiment of the present disclosure;
FIG. 7 is a schematic diagram of a reporting apparatus provided in an embodiment of the present disclosure;
FIG. 8 is a schematic flow chart of a reporting apparatus provided in another embodiment of the present disclosure;
FIG. 9 is a block diagram of a user equipment provided in an embodiment of the present disclosure;
FIG. 10 is a block diagram of a network device provided in an embodiment of the present disclosure.

### DETAILED DESCRIPTION

Reference will now be made in detail to illustrative embodiments, examples of which are illustrated in the accompanying drawings. The following description refers to the accompanying drawings in which the same numbers in different drawings represent the same or similar elements unless otherwise represented. The implementations set forth in the following description of illustrative embodiments do not represent all implementations consistent with embodiments of the present disclosure. Instead, they are merely examples of apparatuses and methods consistent with some aspects related to embodiments of the present disclosure as recited in the appended claims.

Terms used herein in embodiments of the present disclosure are only for the purpose of describing specific embodiments, but should not be construed to limit the present disclosure. As used in the embodiments of the present disclosure and the appended claims, "a/an", "said" and "the" in singular forms are intended to include plural forms, unless clearly indicated in the context otherwise. It should also be understood that, the term "and/or" used herein represents and contains any or all possible combinations of one or more associated listed items.

It should be understood that, although terms such as "first," "second" and "third" may be used in embodiments of the present disclosure for describing various information, these information should not be limited by these terms. These terms are only used for distinguishing information of the same type from each other. For example, first information may also be referred to as second information, and similarly, the second information may also be referred to as the first information, without departing from the scope of embodiments of the present disclosure. As used herein, the term "in case" and "if" may be construed to mean "when" or "upon" or "in response to determining" depending on the context.

The reporting method/apparatus/device and the storage medium provided in embodiments of the present disclosure are described in detail below with reference to the accompanying drawings.

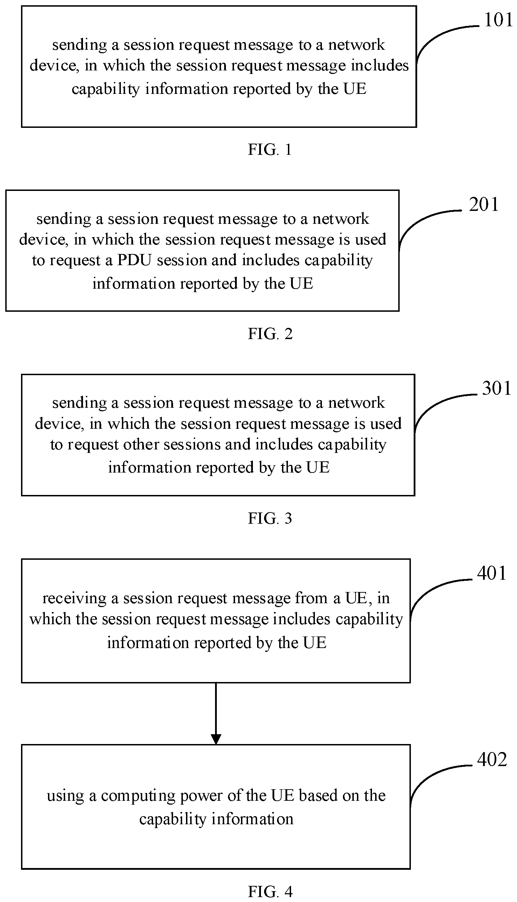

FIG. 1 is a schematic flow chart of a reporting method provided in an embodiment of the present disclosure. The method is performed by a UE. As shown in FIG. 1, the reporting method may include a step as follows.

At step 101, a session request message is sent to a network device, in which the session request message includes capability information reported by the UE.

It should be noted that the method in the embodiment of the present disclosure can be applicable to 5 Generation (5G) communication systems, and can also be applicable to the next generation (or next few generations) of mobile communication systems.

Moreover, in an embodiment of the present disclosure, the UE may refer to a device that provides voice and/or data connectivity to a user. A terminal device can communicate with one or more core networks via a radio access network (RAN). The UE can be an Internet of things (IoT) terminal, such as a sensor device, a mobile phone (or a "cellular" phone), and a computer with an IoT terminal, for example, a fixed, portable, pocket-sized, handheld, computer-built-in, or in-vehicle device. For example, the UE is a station (STA), a subscriber unit, a subscriber station, a mobile station, a mobile, a remote station, an access point, a remote terminal, an access terminal, a user terminal or a user agent. Alternatively, the UE may also be a device of an unmanned aerial vehicle. Alternatively, the UE may also be an in-vehicle device, for example, a driving computer with a wireless communication function, or a wireless terminal externally connected to a driving computer. Alternatively, the UE may also be a roadside device, for example, a street lamp, a signal lamp or other roadside devices with a wireless communication function.

In an embodiment of the present disclosure, the above-mentioned network device may be a core network device.

In an embodiment of the present disclosure, the session request message may be any one of: a session establishment request; or a session modification request.

In an embodiment of the present disclosure, the session request message is used to request a packet data unit (PDU) session and/or other sessions. In an embodiment of the present disclosure, the other sessions may be existing sessions or future sessions. For example, in one embodiment of the present disclosure, the other sessions may be a computing sharing session.

In an embodiment of the present disclosure, the capability information may include at least one of: indication information for indicating whether the UE supports a computing power sharing function; or computing power parameters of the UE.

In an embodiment of the present disclosure, the above-mentioned indication information may be an N-bit indication code, where N is a positive integer. For example, in one embodiment of the present disclosure, the above-mentioned indication information can be a 1-bit indication code. When the indication information is a first value (e.g., 1), the indication information indicates that the UE supports the computing power sharing function. When the indication information is a second value (e.g., 0), the indication information indicates that the UE does not support the computing power sharing function.

In an embodiment of the present disclosure, the computing power parameters of the UE may include at least one of: a main frequency of a computing unit of the UE; a cache of a computing unit of the UE; a number of cores of a computing unit of the UE; a bus speed of a computing unit of the UE; or a proportion of a shareable computing power of the UE in a total computing power.

It should be noted that, in one embodiment of the present disclosure, the above-mentioned capability information may only include indication information. In another embodiment of the present disclosure, when the indication information in the capability information indicates that the UE supports the computing power sharing function, the capability information may further include the above-mentioned computing power parameter of the UE.

In an embodiment of the present disclosure, the above-mentioned capability information is carried in an information element (IE) of the session request message.

Specifically, in an embodiment of the present disclosure, in case that the session request message is used to request the PDU session, the IE may be a UE 5G session management (5GSM) core network capability. In one embodiment of the present disclosure, when the UE reports capability information to the network device through the 5GSM core network capability as the IE, the UE may use one or more bits in the 5GSM core network capability as indication information to indicate whether the UE supports the computing power sharing function.

Further, in an embodiment of the present disclosure, sending the session request message to the network device may include: sending the session request message to the network device via a non-access stratum (NAS) signaling.

In an embodiment of the present disclosure, after the UE reports the above-mentioned capability information to the network device, the network device can perform relevant configurations of computing power sharing on the UE based on the capability information to share the computing power of the UE.

In conclusion, in the reporting method provided in the embodiments of the present disclosure, the UE can send the session request message to the network device, in which the session request message includes capability information reported by the UE, and the capability information may include at least one of indication information for indicating whether the UE supports the computing power sharing function or the computing power parameters of the UE. It can be seen that in the embodiments of the present disclosure, the UE can report capability information to the network device by sending the session request message to the network device so as to inform the network device whether the UE supports the computing power sharing and/or inform the network device of the computing power parameters of the UE. Then, the network device can share the computing power of the UE based on the capability information reported by the UE, thus maximizing the resource utilization, improving the computing efficiency, and reducing the computing cost.

FIG. 2 is a schematic flow chart of a reporting method provided in an embodiment of the present disclosure. The method is performed by a UE. As shown in FIG. 3, the reporting method may include a step as follows.

At step 201, a session request message is sent to a network device, in which the session request message is used to request a PDU session and includes capability information reported by the UE.

In an embodiment of the present disclosure, the session request message may include any one of: a PDU session establishment request; or a PDU session modification request.

Specifically, in one embodiment of the present disclosure, the UE may send a PDU session establishment request message to the network device, in which the PDU session establishment request message includes capability information reported by the UE. In another embodiment of the present disclosure, the UE may send a PDU session modification request message to the network device, in which the PDU session modification request message includes capability information reported by the UE.

It should be noted that, when the above session request message is used to request a PDU session, the sending process of the session request message can be determined based on the 3rd generation partnership project (3GPP) specification 23.501.

Moreover, for the detailed introduction to the capability information, reference may be made to the relevant introduction in the above embodiments, which will not be elaborated herein in detail in the embodiments of the present disclosure.

In conclusion, in the reporting method provided in the embodiments of the present disclosure, the UE can send the session request message to the network device, in which the session request message includes capability information reported by the UE, and the capability information may include at least one of indication information for indicating whether the UE supports the computing power sharing function or the computing power parameters of the UE. It can be seen that in the embodiments of the present disclosure, the UE can report capability information to the network device by sending the session request message to the network device so as to inform the network device whether the UE supports the computing power sharing and/or inform the network device of the computing power parameters of the UE. Then, the network device can share the computing power of the UE based on the capability information reported by the UE, thus maximizing the resource utilization, improving the computing efficiency, and reducing the computing cost.

FIG. 3 is a schematic flow chart of a reporting method provided in an embodiment of the present disclosure. The method is performed by a UE. As shown in FIG. 3, the reporting method may include a step as follows.

At step 301, a session request message is sent to a network device, in which the session request message is used to request other sessions and includes capability information reported by the UE.

In an embodiment of the present disclosure, the other sessions may be existing sessions or future sessions. For example, in one embodiment of the present disclosure, the other sessions may be a computing sharing session.

Moreover, for the detailed introduction to the capability information, reference may be made to the relevant introduction in the above embodiments, which will not be elaborated herein in detail in the embodiments of the present disclosure.

In conclusion, in the reporting method provided in the embodiments of the present disclosure, the UE can send the session request message to the network device, in which the session request message includes capability information reported by the UE, and the capability information may include at least one of indication information for indicating whether the UE supports the computing power sharing function or the computing power parameters of the UE. It can be seen that in the embodiments of the present disclosure, the UE can report capability information to the network device by sending the session request message to the network device so as to inform the network device whether the UE supports the computing power sharing and/or inform the network device of the computing power parameters of the UE. Then, the network device can share the computing power of the UE based on the capability information reported by the UE, thus maximizing the resource utilization, improving the computing efficiency, and reducing the computing cost.

FIG. 4 is a schematic flow chart of a reporting method provided in an embodiment of the present disclosure. The method is performed by a network device. As shown in FIG. 4, the reporting method may include steps as follows.

At step 401, a session request message is received from a UE, in which the session request message includes capability information reported by the UE.

In an embodiment of the present disclosure, the above-mentioned network device may be a core network device.

In an embodiment of the present disclosure, the session request message may be any one of: a session establishment request; or a session modification request.

In an embodiment of the present disclosure, the session request message is used to request a packet data unit (PDU) session and/or other sessions.

In an embodiment of the present disclosure, the capability information may include at least one of: indication information for indicating whether the UE supports a computing power sharing function; or computing power parameters of the UE.

In an embodiment of the present disclosure, the computing power parameters of the UE may include at least one of: a main frequency of a computing unit of the UE; a cache of a computing unit of the UE; a number of cores of a computing unit of the UE; a bus speed of a computing unit of the UE; or a proportion of a shareable computing power of the UE in a total computing power.

For other detailed introduction to step 401, reference may be made to the description in the above embodiments, which will not be elaborated herein in detail in the embodiments of the present disclosure.

At step 402, a computing power of the UE is used based on the capability information.

In an embodiment of the present disclosure, when the indication information indicates that the UE supports the computing power sharing function, the network device can use the computing power of the UE based on the capability information.

Specifically, in one embodiment of the present disclosure, when the indication information indicates that the UE supports the computing power sharing function, the network device can use the computing power of the UE based on the computing power parameters of the UE.

In conclusion, in the reporting method provided in the embodiments of the present disclosure, the network device can receive the session request message from the UE, in which the session request message includes capability information reported by the UE, and the capability information may include at least one of indication information for indicating whether the UE supports the computing power sharing function or the computing power parameters of the UE. It can be seen that in the embodiments of the present disclosure, the UE can report capability information to the network device by sending the session request message to the network device so as to inform the network device whether the UE supports the computing power sharing and/or inform the network device of the computing power parameters of the UE. Then, the network device can share the computing power of the UE based on the capability information reported by the UE, thus maximizing the resource utilization, improving the computing efficiency, and reducing the computing cost.

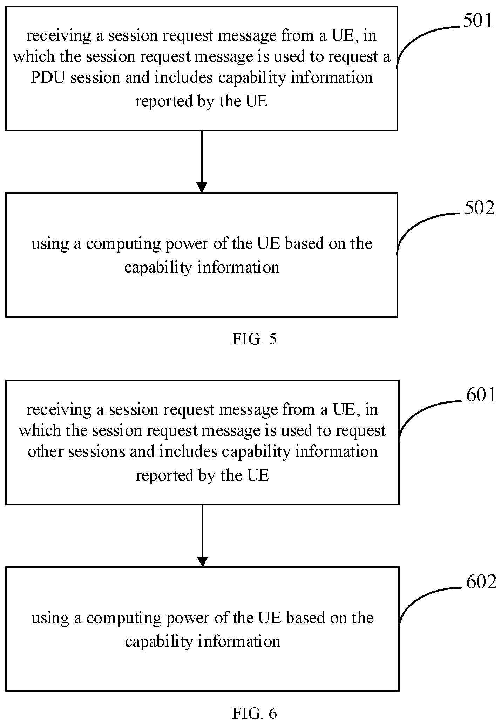

FIG. 5 is a schematic flow chart of a reporting method provided in an embodiment of the present disclosure. The method is performed by a network device. As shown in FIG. 5, the reporting method may include steps as follows.

At step 501, a session request message is received from a UE, in which the session request message is used to request a PDU session and includes capability information reported by the UE.

At step 502, a computing power of the UE is used based on the capability information.

For other detailed introduction to steps 501 and 502, reference may be made to the description in the above embodiments, which will not be elaborated herein in detail in the embodiments of the present disclosure.

In conclusion, in the reporting method provided in the embodiments of the present disclosure, the network device can receive the session request message from the UE, in which the session request message includes capability information reported by the UE, and the capability information may include at least one of indication information for indicating whether the UE supports the computing power sharing function or the computing power parameters of the UE. It can be seen that in the embodiments of the present disclosure, the UE can report capability information to the network device by sending the session request message to the network device so as to inform the network device whether the UE supports the computing power sharing and/or inform the network device of the computing power parameters of the UE. Then, the network device can share the computing power of the UE based on the capability information reported by the UE, thus maximizing the resource utilization, improving the computing efficiency, and reducing the computing cost.

FIG. 6 is a schematic flow chart of a reporting method provided in an embodiment of the present disclosure. The method is performed by a network device. As shown in FIG. 5, the reporting method may include steps as follows.

At step 601, a session request message is received from a UE, in which the session request message is used to request other sessions and includes capability information reported by the UE.

At step 602, a computing power of the UE is used based on the capability information.

For other detailed introduction to steps 601 and 602, reference may be made to the description in the above embodiments, which will not be elaborated herein in detail in the embodiments of the present disclosure.

In conclusion, in the reporting method provided in the embodiments of the present disclosure, the network device can receive the session request message from the UE, in which the session request message includes capability information reported by the UE, and the capability information may include at least one of indication information for indicating whether the UE supports the computing power sharing function or the computing power parameters of the UE. It can be seen that in the embodiments of the present disclosure, the UE can report capability information to the network device by sending the session request message to the network device so as to inform the network device whether the UE supports the computing power sharing and/or inform the network device of the computing power parameters of the UE. Then, the network device can share the computing power of the UE based on the capability information reported by the UE, thus maximizing the resource utilization, improving the computing efficiency, and reducing the computing cost.

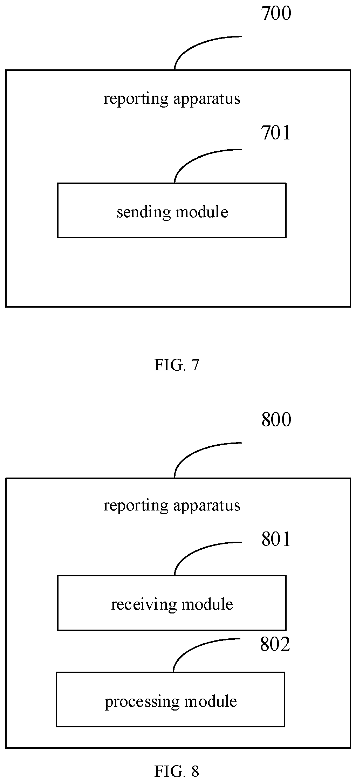

FIG. 7 is a schematic diagram of a reporting apparatus provided in an embodiment of the present disclosure. As shown in FIG. 7, the apparatus may include a sending module 701 configured to send a session request message to a network device, in which the session request message includes capability information reported by the UE, and the capability information includes at least one of: indication information for indicating whether the UE supports a computing power sharing function; or computing power parameters of the UE.

In conclusion, in the reporting apparatus provided in the embodiments of the present disclosure, the UE can send the session request message to the network device, in which the session request message includes capability information reported by the UE, and the capability information may include at least one of indication information for indicating whether the UE supports the computing power sharing function or the computing power parameters of the UE. It can be seen that in the embodiments of the present disclosure, the UE can report capability information to the network device by sending the session request message to the network device so as to inform the network device whether the UE supports the computing power sharing and/or inform the network device of the computing power parameters of the UE. Then, the network device can share the computing power of the UE based on the capability information reported by the UE, thus maximizing the resource utilization, improving the computing efficiency, and reducing the computing cost.

Optionally, in an embodiment of the present disclose, the computing power parameters of the UE include at least one of: a main frequency of a computing unit of the UE; a cache of a computing unit of the UE; a number of cores of a computing unit of the UE; a bus speed of a computing unit of the UE; or a proportion of a shareable computing power of the UE in a total computing power.

Optionally, in an embodiment of the present disclose, the session request message is any one of: a session establishment request; or a session modification request.

Optionally, in an embodiment of the present disclose, the sending module 701 is further configured to: send the session request message to the network device via a non-access stratum (NAS) signaling.

Optionally, in an embodiment of the present disclose, the session request message is used to request a packet data unit (PDU) session and/or other sessions.

Optionally, in an embodiment of the present disclose, the capability information is carried in an information element (IE) of the session request message.

Optionally, in an embodiment of the present disclose, in case that the session request message is used to request the PDU session, the IE includes a UE 5G session management (5GSM) core network capability.

Optionally, in an embodiment of the present disclose, in case that the session request message is used to request the PDU session, the session request includes any one of: a PDU session establishment request; or a PDU session modification request.

FIG. 8 is a schematic diagram of a reporting apparatus provided in an embodiment of the present disclosure. As shown in FIG. 8, the apparatus may include a receiving module 801 configured to receive a session request message from a UE, in which the session request message includes capability information reported by the UE, and the capability information includes at least one of: indication information for indicating whether the UE supports a computing power sharing function; or computing power parameters of the UE; and a processing module 802 configured to use a computing power of the UE based on the capability information.

In conclusion, in the reporting apparatus provided in the embodiments of the present disclosure, the network device can receive the session request message from the UE, in which the session request message includes capability information reported by the UE, and the capability information may include at least one of indication information for indicating whether the UE supports the computing power sharing function or the computing power parameters of the UE. It can be seen that in the embodiments of the present disclosure, the UE can report capability information to the network device by sending the session request message to the network device so as to inform the network device whether the UE supports the computing power sharing and/or inform the network device of the computing power parameters of the UE. Then, the network device can share the computing power of the UE based on the capability information reported by the UE, thus maximizing the resource utilization, improving the computing efficiency, and reducing the computing cost.

Optionally, in an embodiment of the present disclose, the computing power parameters of the UE include at least one of: a main frequency of a computing unit of the UE; a cache of a computing unit of the UE; a number of cores of a computing unit of the UE; a bus speed of a computing unit of the UE; or a proportion of a shareable computing power of the UE in a total computing power.

Optionally, in an embodiment of the present disclose, the processing module 802 is further configured to: use the computing power of the UE in case that the indication information indicates that the UE supports the computing power sharing function.

Optionally, in an embodiment of the present disclose, the session request message is any one of: a session establishment request; or a session modification request.

Optionally, in an embodiment of the present disclose, the receiving module 801 is further configured to: receive the session request message from the UE via a non-access stratum (NAS) signaling.

Optionally, in an embodiment of the present disclose, the session request message is used to request a packet data unit (PDU) session and/or other sessions.

Optionally, in an embodiment of the present disclose, the capability information is carried in an information element (IE) of the session request message.

Optionally, in an embodiment of the present disclose, in case that the session request message is used to request the PDU session, the IE includes a UE 5G session management (5GSM) core network capability.

Optionally, in an embodiment of the present disclose, in case that the session request message is used to request the PDU session, the session request includes any one of: a PDU session establishment request; or a PDU session modification request.

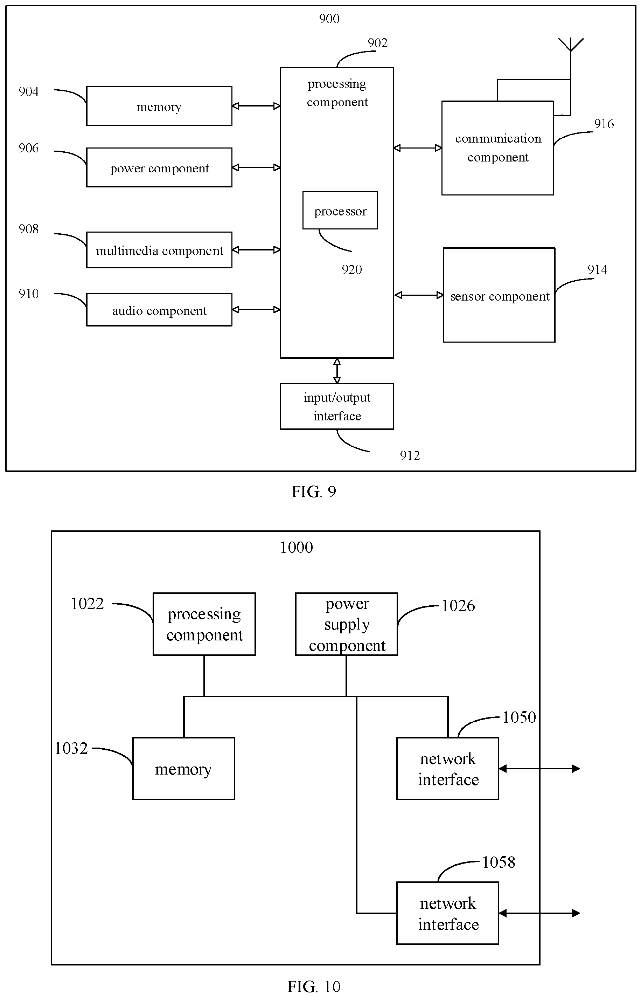

FIG. 9 is a block diagram of a UE 900 provided in an embodiment of the present disclosure. For example, the UE 900 can be a mobile phone, a computer, a digital broadcast terminal, a messaging device, a game console, a tablet device, a medical device, a fitness device, a personal digital assistant, or the like.

Referring to FIG. 9, the UE 900 may include one or more of the following components: a processing component 902, a memory 904, a power component 906, a multimedia component 908, an audio component 910, an input/output (I/O) interface 912, a sensor component 913, and a communication component 916.

The processing component 902 typically controls overall operations of the UE 900, such as the operations associated with display, phone calls, data communications, camera operations, and recording operations. The processing component 902 can include one or more processors 920 to execute instructions to perform all or some of the steps in the above-described methods. Moreover, the processing component 902 may include one or more modules which facilitate the interaction between the processing component 902 and other components. For instance, the processing component 902 may include a multimedia module to facilitate the interaction between the multimedia component 908 and the processing component 902.

The memory 904 is configured to store various types of data to support the operation of the UE 900. Examples of such data include instructions for any applications or methods operated on the UE 900, contact data, phonebook data, messages, pictures, videos, etc. The memory 904 may be implemented using any type of volatile or non-volatile memory devices, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, or a magnetic or optical disk.

The power component 906 provides power to various components of the UE 900. The power component 906 may include a power management system, one or more power sources, and any other components associated with the generation, management, and distribution of power in the UE 900.

The multimedia component 908 includes a screen providing an output interface between the UE 900 and the user. In some embodiments, the screen may include a liquid crystal display (LCD) and a touch panel (TP). If the screen includes the touch panel, the screen may be implemented as a touch screen to receive input signals from the user. The touch panel includes one or more touch sensors to sense touches, swipes, and gestures on the touch panel. The touch sensors may not only sense a boundary of a touch or swipe action, but also sense a period of time and a pressure associated with the touch or swipe action. In some embodiments, the multimedia component 908 includes a front camera and/or a rear camera. The front camera and/or the rear camera may receive an external multimedia datum while the UE 900 is in an operation mode, such as a photographing mode or a video mode. Each of the front camera and the rear camera may be a fixed optical lens system or have focus and optical zoom capability.

The audio component 910 is configured to output and/or input audio signals. For example, the audio component 910 includes a microphone (MIC) configured to receive an external audio signal when the UE 900 is in an operation mode, such as a call mode, a recording mode, and a voice recognition mode. The received audio signal may be further stored in the memory 904 or transmitted via the communication component 916. In some embodiments, the audio component 910 further includes a speaker to output audio signals.

The I/O interface 912 provides an interface between the processing component 902 and peripheral interface modules, such as keyboards, click wheels, buttons, and the like. The buttons may include, but are not limited to, a home button, a volume button, a starting button, and a locking button.

The sensor component 913 includes one or more sensors to provide status assessments of various aspects of the UE 900. For instance, the sensor component 913 may detect an open/closed status of the UE 900, relative positioning of components, e.g., the display and the keypad, of the UE 900, a change in position of the UE 900 or a component of the UE 900, a presence or absence of user contact with the UE 900, an orientation or an acceleration/deceleration of the UE 900, and a change in temperature of the UE 900. The sensor component 913 may include a proximity sensor configured to detect the presence of nearby objects without any physical contact. The sensor component 913 may further include a light sensor, such as a CMOS or CCD image sensor, for use in imaging applications. In some embodiments, the sensor component 913 may further include an accelerometer sensor, a gyroscope sensor, a magnetic sensor, a pressure sensor, or a temperature sensor.

The communication component 916 is configured to facilitate communication, wired or wireless, between the UE 900 and other devices. The UE 900 can access a wireless network based on a communication standard, such as Wi-Fi, 2G, or 3G, or a combination thereof. In an illustrative embodiment, the communication component 916 receives a broadcast signal or broadcast associated information from an external broadcast management system via a broadcast channel. In an illustrative embodiment, the communication component 916 further includes a near field communication (NFC) module to facilitate short-range communications. For example, the NFC module may be implemented based on a radio frequency identification (RFID) technology, an infrared data association (IrDA) technology, an ultra-wideband (UWB) technology, a Bluetooth (BT) technology, and other technologies.

In an illustrative embodiment, the UE 900 may be implemented with one or more application specific integrated circuits (ASICs), digital signal processors (DSPs), digital signal processing devices (DSPDs), programmable logic devices (PLDs), field programmable gate arrays (FPGAs), controllers, micro-controllers, microprocessors, or other electronic elements, for performing the above-mentioned method.

FIG. 10 is a block diagram of a network device 1000 provided in an embodiment of the present disclosure. For example, the network device 1000 may be provided as a network side device. Referring to FIG. 10, the network device 1000 includes a processing component 1011, which further includes at least one processor; and a memory resource represented by a memory 1032 for storing instructions executable by the processing component 1022, such as an application program. The application program stored in the memory 1032 may include one or more modules each corresponding to a set of instructions. In addition, the processing component 1010 is configured to execute instructions to perform any method of the above-mentioned methods applied to the network device, for example, the method shown in FIG. 1.

The network device 1000 may also include a power supply component 1026 configured to perform power management of the network device 1000, a wired or wireless network interface 1050 configured to connect the network device 1000 to a network, and an input/output (I/O) interface 1058. The network device 1000 can operate based on an operating system stored in the memory 1032, such as Windows Server TM, Mac OS X TM, Unix TM, Linux TM, Free BSD TM or the like.

In the above embodiments provided in the present disclosure, the methods provided in the embodiments of the present disclosure are introduced from the perspectives of the network device and the UE respectively. In order to implement the various functions in the above-mentioned methods provided in the embodiments of the present disclosure, the network device and the UE may include a hardware structure and a software module to implement the above-mentioned various functions in the form of a hardware structure, a software module, or a hardware structure plus a software module. A certain one of the above functions may be implemented in the form of a hardware structure, a software module, or a hardware structure plus a software module.

In the above embodiments provided in the present disclosure, the methods provided in the embodiments of the present disclosure are introduced from the perspectives of the network device and the UE respectively. In order to implement the various functions in the above-mentioned methods provided in the embodiments of the present disclosure, the network device and the UE may include a hardware structure and a software module to implement the above-mentioned various functions in the form of a hardware structure, a software module, or a hardware structure plus a software module. A certain one of the above functions may be implemented in the form of a hardware structure, a software module, or a hardware structure plus a software module.

An embodiment of the present disclosure provides a communication device. The communication device may include a transceiver module and a processing module. The transceiver module may include a sending module and/or a receiving module. The sending module is used to implement a sending function, and the receiving module is used to implement a receiving function. The transceiver module can implement a sending function and/or a receiving function.

The communication device may be a terminal device (such as the terminal device in the above-mentioned method embodiments), or an apparatus in a terminal device, or a device that can be used in cooperation with a terminal device. Alternatively, the communication device may be a network device, or an apparatus in a network device, or a device that can be used in cooperation with a network device.

Another communication device is provided in an embodiment of the present disclosure. The communication device may be a network device, or may be a terminal device (such as the terminal device in the above-mentioned method embodiments), or may be a chip, a chip system, or a processor supporting the network device to implement the above-mentioned method, or may be a chip, a chip system or a processor supporting the terminal device to implement the above-mentioned method. The communication device may be used to implement the methods as described in the above-mentioned method embodiments. For details, reference may be made to the description in the above-mentioned method embodiments.

The communication device may include one or more processors. The processor may be a general-purpose processor, a special-purpose processor, or the like. It may be, for example, a baseband processor or a central processor. The baseband processor may be used to process a communication protocol and communication data, and the central processor may be used to control a communication device (such as a network device, a baseband chip, a terminal device, a terminal device chip, a DU, a CU, or the like), execute a computer program, and process data of the computer program.

Optionally, the communication device may further include one or more memories on which the computer program may be stored, and the processor is configured to execute the computer program to cause the communication device to perform the method as described in the above-mentioned method embodiments. Optionally, the memory may also have data stored therein. The communication device and the memory may be provided independently or integrated together.

Optionally, the communication device may further include a transceiver and an antenna. The transceiver may be referred to as a transceiver unit, a transceiver device, a transceiver circuit or the like for implementing a transceiver function. The transceiver may include a receiver and a transmitter, the receiver may be referred to as a receiving device, a receiving circuit or the like for implementing a receiving function; and the transmitter may be referred to as a transmitting device, a transmitting circuit or the like for implementing a transmitting function.

Optionally, the communication device may further include one or more interface circuits. The interface circuit is configured to receive and transmit a code instruction to the processor. The processor is configured to run the code instruction to enable the communication device to perform the method described in any of the above-mentioned method embodiments.

The communication device is a terminal device (such as the terminal device in the above-mentioned method embodiments), and the processor is configured to execute any one of the methods shown in FIGS. 1 to 3.

The communication device is a network device, and the transceiver is configured to execute any one of the methods shown in FIGS. 4 to 6.

In an implementation, the processor may include a transceiver for implementing receiving and transmitting functions. For example, the transceiver may be a transceiver circuit, an interface, or an interface circuit. The transceiver circuit, the interface, or the interface circuit for implementing the receiving and transmitting functions may be separate or integrated together. The transceiver circuit, the interface or the interface circuit may be configured to read and write code/data, or may be configured to transmit or transfer signals.

In an implementation, the processor may store the computer program that, when running on the processor, enables the communication device to perform the method described in the above-mentioned method embodiments. The computer program may be embedded in the processor, in which case the processor may be implemented by hardware.

In an implementation, the communication device may include a circuit that may perform the transmitting, receiving or communicating function in the foregoing method embodiments. The processor and transceiver described in the present disclosure may be implemented on an integrated circuit (IC), an analog IC, a radio frequency integrated circuit (RFIC), a mixed signal IC, an application specific integrated circuit (ASIC), a printed circuit board (PCB), an electronic device, etc. The processor and transceiver may also be fabricated with various IC process technologies, such as complementary metal oxide semiconductors (CMOSs), n-metal-oxide-semiconductors (NMOSs), positive channel metal oxide semiconductors (PMOSs), bipolar junction transistors (BJTs), bipolar CMOSs (BiCMOSs), silicon germanium (SiGe), gallium arsenide (GaAs), etc.

The communication device described in the above embodiments may be a network device or a terminal device (such as the terminal device in the above-mentioned method embodiments), but the scope of the communication device described in the present disclosure is not limited thereto. The structure of the communication device may not be limited. The communication device may be a stand-alone device or may be part of a larger device. For example, the communication device may be:
(1) a stand-alone integrated circuit (IC), or a chip, or a chip system or subsystem;
(2) a set of one or more ICs, in which optionally, the set of ICs may also include a storage component for storing data and computer programs;
(3) an ASIC, such as a modem;
(4) a module that may be embedded in other devices;
(5) a receiver, a terminal device, an intelligent terminal device, a cellular phone, a wireless device, a handheld device, a mobile unit, an in-vehicle device, a network device, a cloud device, an artificial intelligence device, etc.;
(6) others.

In the case where the communication device may be a chip or a chip system, the chip includes a processor and an interface. The number of processors may be one or more, and the number of interfaces may be more than one.

Optionally, the chip further includes a memory for storing necessary computer programs and data.

Those skilled in the art may also understand that various illustrative logical blocks and steps listed in embodiments of the present disclosure may be implemented by an electronic hardware, a computer software, or a combination thereof. Whether such functions are implemented by a hardware or a software depends on specific applications and design requirements of an overall system. For each specific application, those skilled in the art may use various methods to implement the function, but such an implementation should not be understood as extending beyond the protection scope of embodiments of the present disclosure.

An embodiment of the present disclosure further provides a system for determining the duration of a side link. The system includes the communication device as the terminal device (such as the first terminal device in the above-mentioned method embodiment) and the communication device as the network device in the above-mentioned embodiments. Alternatively, the system includes the communication device as the terminal device (such as the first terminal device in the above-mentioned method embodiment) and the communication device as the network device as shown in the above-mentioned embodiments.

The present disclosure further provides a readable storage medium having stored therein instructions that, when executed by a computer, cause functions of any one of the above method embodiments to be implemented.

The present disclosure further provides a computer program product that, when executed by a computer, causes functions of any one of the above method embodiments to be implemented.

All or some of the above embodiments may be implemented by a software, a hardware, a firmware or any combination thereof. When implemented using the software, all or some of the above embodiments may be implemented in a form of the computer program product. The computer program product includes one or more computer programs. When the computer program is loaded and executed on the computer, all or some of the processes or functions according to embodiments of the present disclosure will be generated. The computer may be a general-purpose computer, a special-purpose computer, a computer network, or other programmable devices. The computer program may be stored in a computer-readable storage medium, or transmitted from one computer-readable storage medium to another computer-readable storage medium. For example, the computer program may be transmitted from one website site, computer, server or data center to another website site, computer, server or data center in a wired manner (such as via a coaxial cable, an optical fiber, a digital subscriber line (DSL)) or a wireless manner (for example, in an infrared, wireless, or microwave manner, or the like). The computer-readable storage medium may be any available medium that can be accessed by the computer, or a data storage device such as a server or a data center integrated by one or more available media. The available medium may be a magnetic medium (for example, a floppy disk, a hard disk, or a magnetic tape), an optical medium (for example, a high-density digital video disc (DVD)), a semiconductor medium (for example, a solid state disk (SSD)), or the like.

Those of ordinary skill in the art can understand that the first, second, and other numeral numbers involved in the present disclosure are only for convenience of description, and are not intended to limit the scope of embodiments of the present disclosure, nor are they intended to represent a sequential order.

The term "at least one" used in the present disclosure may also be described as one or more, and the term "a plurality of" may cover two, three, four or more, which are not limited in the present disclosure. In embodiments of the present disclosure, for a certain kind of technical features, the technical features in this kind of technical features are distinguished by terms like "first", "second", "third", "A", "B", "C" and "D", etc., and these technical features described with the terms "first", "second", "third", "A", "B", "C" and "D" have no order of precedence or size.

Other embodiments of the present disclosure will be apparent to those skilled in the art from consideration of the specification and practice of the present disclosure disclosed here. The present disclosure is intended to cover any variations, uses, or adaptations of the present disclosure following the general principles thereof and including such departures from the present disclosure as come within known or customary practice in the art. It is intended that the specification and examples be considered as exemplary only, with a true scope and spirit of the present disclosure being indicated by the following claims.

It will be appreciated that the present disclosure is not limited to the exact construction that has been described above and illustrated in the accompanying drawings, and that various modifications and changes can be made without departing from the scope thereof. It is intended that the scope of the present disclosure only be limited by the appended claims.

## Claims

1. A reporting method, performed by a user equipment (UE), comprising:
sending a session request message to a network device, wherein the session request message comprises capability information reported by the UE, and the capability information comprises at least one of:
indication information for indicating whether the UE supports a computing power sharing function; or
computing power parameters of the UE.

2. The method according to claim 1, wherein the computing power parameters of the UE comprise at least one of:
a main frequency of a computing unit of the UE;
a cache of a computing unit of the UE;
a number of cores of a computing unit of the UE;
a bus speed of a computing unit of the UE; or
a proportion of a shareable computing power of the UE in a total computing power.

3. The method according to claim 1, wherein the session request message is any one of:
a session establishment request; or
a session modification request.

4. The method according to claim 1, wherein sending the session request message to the network device comprises:
sending the session request message to the network device via a non-access stratum (NAS) signaling.

5. The method according to claim 1, wherein the session request message is used to request a packet data unit (PDU) session and/or other sessions.

6. The method according to claim 5, wherein the capability information is carried in an information element (IE) of the session request message.

7. The method according to claim 6, wherein in case that the session request message is used to request the PDU session, the IE comprises a UE 5G session management (5GSM) core network capability.

8. The method according to claim 6, wherein in case that the session request message is used to request the PDU session, the session request comprises any one of:
a PDU session establishment request; or
a PDU session modification request.

9. A reporting method, performed by a network device, comprising:
receiving a session request message from a user equipment (UE), wherein the session request message comprises capability information reported by the UE, and the capability information comprises at least one of: indication information for indicating whether the UE supports a computing power sharing function; or computing power parameters of the UE; and
using a computing power of the UE based on the capability information.

10. The method according to claim 9, wherein the computing power parameters of the UE comprise at least one of:
a main frequency of a computing unit of the UE;
a cache of a computing unit of the UE;
a number of cores of a computing unit of the UE;
a bus speed of a computing unit of the UE; or
a proportion of a shareable computing power of the UE in a total computing power.

11. The method according to claim 9, wherein using the computing power of the UE based on the capability information comprises:
using the computing power of the UE in case that the indication information indicates that the UE supports the computing power sharing function.

12. The method according to claim 9, wherein the session request message is any one of:
a session establishment request; or
a session modification request.

13. The method according to claim 9, wherein receiving the session request message from the UE comprises:
receiving the session request message from the UE via a non-access stratum (NAS) signaling.

14. The method according to claim 9, wherein the session request message is used to request a packet data unit (PDU) session and/or other sessions.

15. The method according to claim 14, wherein the capability information is carried in an information element (IE) of the session request message.

16. The method according to claim 15, wherein in case that the session request message is used to request the PDU session, the IE comprises a UE 5G session management (5GSM) core network capability.

17. The method according to claim 15, wherein in case that the session request message is used to request the PDU session, the session request comprises any one of:
a PDU session establishment request; or
a PDU session modification request.

18. A reporting apparatus, comprising:
a sending module configured to send a session request message to a network device, wherein the session request message comprises capability information reported by the UE, and the capability information comprises at least one of:
indication information for indicating whether the UE supports a computing power sharing function; or
computing power parameters of the UE.

19. A reporting apparatus, comprising:
a receiving module configured to receive a session request message from a user equipment (UE), wherein the session request message comprises capability information reported by the UE, and the capability information comprises at least one of:
indication information for indicating whether the UE supports a computing power sharing function; or
computing power parameters of the UE; and
a processing module configured to use a computing power of the UE based on the capability information.

20. A communication device, comprising:
a processor; and
a memory having stored therein a computer program,
wherein the processor is configured to execute the computer program stored in the memory to cause the device to perform the method according to any one of claims 1 to 8.

21. A communication device, comprising:
a processor; and
a memory having stored therein a computer program,
wherein the processor is configured to execute the computer program stored in the memory to cause the device to perform the method according to any one of claims 9 to 17.

22. A communication device, comprising:
a processor; and
an interface circuit configured to receive code instructions and transmit the code instructions to the processor,
wherein the processor is configured to run the code instructions to perform the method according to any one of claims 1 to 8.

23. A communication device, comprising:
a processor; and
an interface circuit configured to receive code instructions and transmit the code instructions to the processor,
wherein the processor is configured to run the code instructions to perform the method according to any one of claims 9 to 17.

24. A computer-readable storage medium having stored therein instructions that, when executed, cause the method according to any one of claims 1 to 8 to be implemented.

25. A computer-readable storage medium having stored therein instructions that, when executed, cause the method according to any one of claims 9 to 17 to be implemented.
